# EUROPEAN PATENT APPLICATION

(11) **EP 2 445 183 A2**
(43) Date of publication of application: **25.04.2012**
(21) Application number: 11185449.3
(22) Date of filing: 17.10.2011
(51) Int. Cl.: H04M 1/725, H04M 19/04

(54) **Mobile device for emotional communication**

(30) Priority: 22.10.2010 EP 10188523
(71) Applicant: Deutsche Telekom AG, 53113 Bonn (DE)
(72) Inventor: Wössner, Stefan, 10781 Berlin (DE); Sommerwerk, Andreas, 10119 Berlin (DE); Schmolze, Raimund, 53115 Bonn (DE)
(74) Representative: Vossius & Partner

(57) **Abstract**

A device for notifying a user of an incoming predefined message is provided. The device comprises radio communication means for wirelessly receiving the predefined message and signaling means for notifying the incoming message to the user. The device may further comprise inputting means to be operated by the user for initiating sending a message to another predetermined device, wherein the radio communication means is further adapted to wirelessly transmit the predefined message. According to an embodiment, a system comprises at least a first device and at least a second device, wherein the first device is adapted to transmit the predefined message to the second device, the second device being adapted to operate its signaling means in response to receiving incoming message from the first device. Also, a method of transmitting a predefined message to a user is provided.

## Description

The present invention relates to a wireless communication device, and in particular to a wireless or mobile communication device which is adapted to be used for communicating an emotional message.

It is widely known that wireless communication devices, such as cellular mobile phones get personalised by their respective owners in all ways the product allows it.

Mobile phones have become an extension and integral part of its user's personality. There are many reasons for this. Amongst others these are: 1) Mobile communication devices are always carried along and are always within reach of the users. 2) Most people are aware of the fact that when calling a mobile phone number, they will reach exactly the person they want to talk to. 4) Most new mobile devices, especially modern smartphones can be tailored very specifically to the needs of a user, e.g. via applications. 5) Mobile phones contain lots of personal data, such as contact details, emails, short messages, pictures, etc. Mostly they are the only place where all this data is stored. 6) Mobile communication devices get you in contact with all persons you have relations to. 7) Many users make use of the feature to assign specific ring tones or display pictures to express their relation to the calling party.

Nowadays mobile communication devices are used for much more than their predefined functionalities such as voice communication or sending text and picture messages (non intentional design). In some situations a word via a voice call is just not adequate or a call would disturb the other one too much. Therefore creative users in some regions of the world use 'codes' to transfer certain message content. Letting the other's portable device ring just once could be a code for some previously defined message, e.g. that the sending person thinks of the receiving person. By this, mobile communication devices are more and more used to transfer some kind of emotion.

Others have invented special solutions to edit and transfer a multitude of settings from one portable equipment to another, so that one device can determine how a receiving device should behave once a message (e.g. call, sms, etc.) from the sending device arrives and vice versa (WO2007068293). The inclusion of many adjustable parameters on both sides should result in the receiver's feeling of being treated in a special, personal manner and thus express emotions much easier.

The disadvantages of the previously mentioned solutions to transfer emotions are manifold. Firstly, all these solutions are based on existing devices, adding either a virtual coding (that has to be agreed between the communication parties in advance) or increasing complexity in the devices. Secondly, the virtual coding of the non intentional design approach of letting the receiving parties communication device ring just once may lead to misinterpretations. If the receiving party e.g. misses this one ring, it has later on no chance of recovering the real intention of the calling party, because today's technology does not display how often the device rang. This could lead to unintended calls and thus to disturbance that the calling party wanted to avoid. This method also relies on the transmission of the caller's number via the cellular network. However, there may be situations in which the transmission of the caller's number is not provided by the cellular network, e.g. when one of the parties roams in a foreign network. Thirdly, WO2007068293 described above requires both parties to edit and determine many aspect of the respective device's reaction to the various emotions that could be transferred. This is very complicated for both parties and for some people it may be daunting to know that somebody else may determine how one's mobile phone reacts to a call or message, giving at least partly away the control over one's own device.

All the existing solutions either lack unambiguousness in the message they are transporting, leading to misunderstandings, additional cost for unwanted calls, conflicts in personal relations, or add complexity to existing wireless communication devices. This all is hindering the natural desire of human beings for the exchange of emotions even over longer distances.

Currently there is no device on the market that was specifically designed to transmit the message of "thinking of each other" between two people that are geographically separated. Consequently, a problem to be solved with the present invention is to provide a device which allows to establish an emotional connection between the user and the dedicated device to be used. Furthermore, with the present invention, the overly complex and error-prone operation of the solutions described above should be simplified.

These problems are solved with the features of the claims.

According to an aspect of the present invention the problem mentioned above is tackled by using mobile devices that are symbols for emotions themselves, because they are heart shaped in a three dimensional way, at the same time light and small enough to be always carried around. The outer shape of the devices makes them highly desirable and makes it a pleasure to take into one's hands. The signaling interface may be designed in the same emotional way. Incoming messages may be indicated by a heartbeat-like movement of the device and a pulsating light.

Furthermore, with the present invention, the user is provided with a very simple, natural and intuitive interface for operation. The device according to an embodiment of the invention has only one visible input button to power up and power down the electronic modules the device consists of. The operation to send a message could either be done by a pressure sensing device that detects if the device is squeezed in a definite way or by a gesture sensing device that detects if the surface of the device is being stroked by the user. To reduce the risk of false messages to be sent, it is preferred that the device is confirmed to detect a pressure which is applied for a certain time and/or where the stroking has to follow a specific, yet simple pattern. The device may be configured such that after a successful operation, a visible and tactile feedback is given to the user.

On the receiving side, the indication of an incoming emotional message may be done by a tactile, heartbeat-like pulsating movement of the device, and/or by a warm glowing light pulsating in the same rhythm as the movement.

With the present invention, a device, a system and a method are provided which allow to transmit an emotional message between two people that are geographically separated. By making use of existing wireless cellular or other types of networks, two dedicated devices with a very easy operation transmit a very clear emotional message "I'm thinking of you" from one device to the other and vice versa that cannot be misinterpreted.

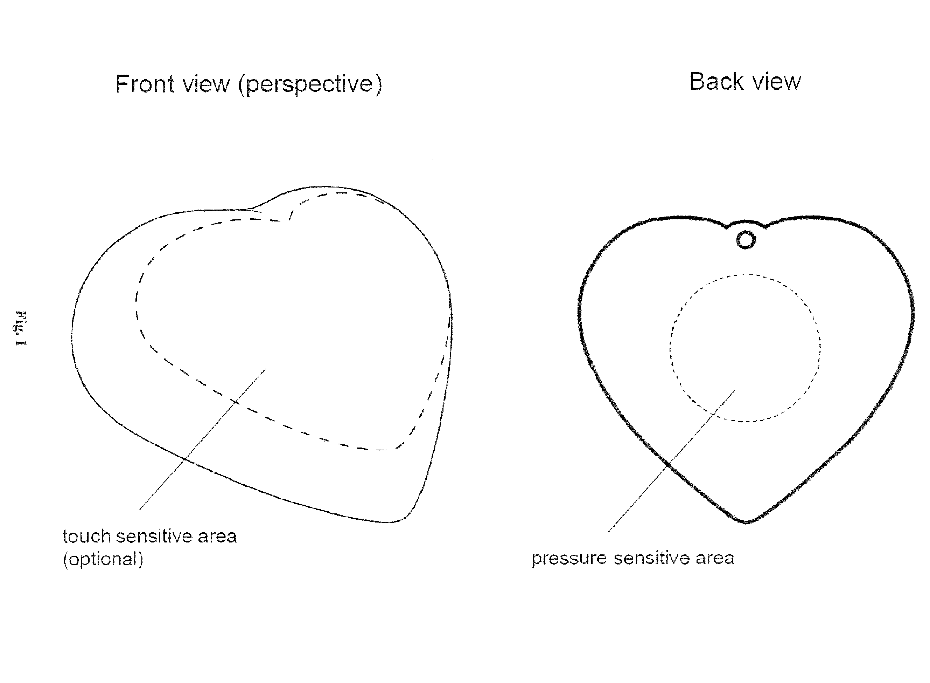

An exemplary solution according to an embodiment of the present invention is described in more detail in the following description with reference to the figures wherein
Fig. 1 is a front view and a back view of an embodiment of the device according to the present invention, and
Fig. 2 exemplarily shows a block drawing of an embodiment of the invention.

The exemplary solution described in the following consists of a heart shaped enclosure for the mobile emotional communication device (a). Two of these devices form a pair belonging together (partner devices).

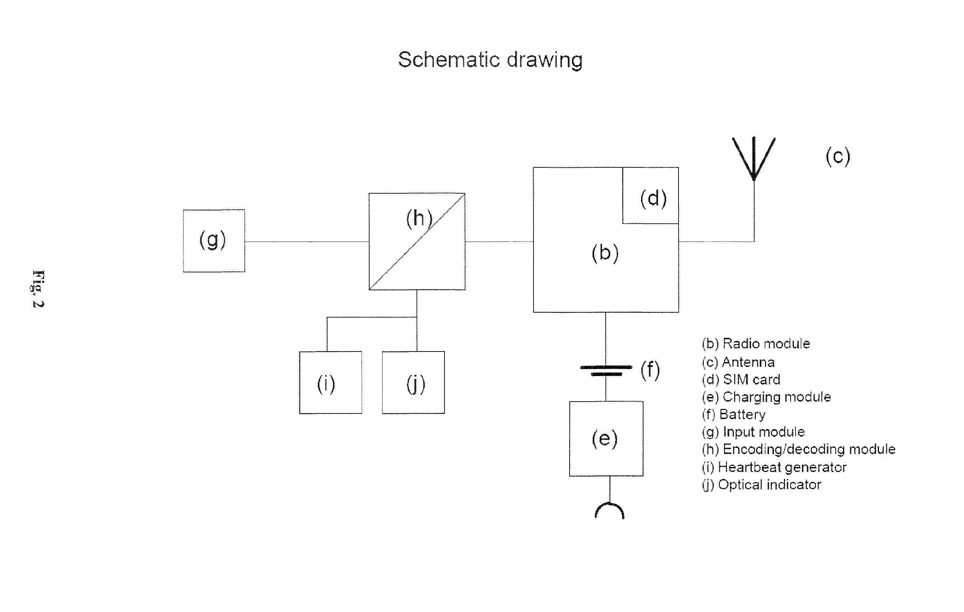

According to the block diagram of Fig. 2, the device according to this embodiment also comprises a radio communication module (b) with antenna (c) and operator SIM card (d), enabling the device to connect to a cellular mobile network (e.g. GSM, GPRS, UMTS, HSxPA, CDMA, LTE, etc.). Additionally, communication between the two partner devices could be established over other sorts of wireless networks, e.g. wireless local area networks, Bluetooth, etc. Via the radio module an encoded message is exchanged between the two partner devices. The encoding on the one hand makes sure that only the respective partner device can decode the message and on the other hand prevents the indication of normal messages being sent accidentally to one of the partner devices phone numbers. The transmission of messages between the two parties can be realised e.g. via standard GSM short messages service. Depending on the type of network being used, other options can be direct data connections (circuit switched data), IP connection, object exchange, etc. A special way to exchange the information of thinking of each other between the two emotional communication devices mimics the workaround described earlier in this document. After the user initiates the communication, the sender's device calls its partner device. The called device recognises the caller's number, ends the call and starts the signalling. This way no direct cost for calling or data exchange is generated by the communication parties.

The device according to this embodiment also comprises a charging device (e) with battery (f) and low battery indicator (LED).

The device according to this embodiment also comprises of an input module (g). The input module recognizes the user input. It provides the functionality of switching on and off the communication device, as well as initiating the sending of an emotional message. All functions can be operated with just one pressure sensitive device (e.g. piezo-resistive device, but also a simple button will do). Alternatively, in addition to the power switch, a touch sensitive device reacting to a specific stroke pattern could be used to initiate the sending of a message. Both ways are very straight forward modes of operation that have their equivalence in the real world of emotions (cuddling, stroking as signs of affection).

The device according to this embodiment also comprises an encoding/decoding module (h). In this module the user input from the input module (g) is recognized and an encoded message is sent to the radio module. Additionally in this module the incoming messages are decoded. If a valid message from the partner device is recognised, the heartbeat generator and the LED signal are activated to indicate the successful reception.

The device according to this embodiment also comprises a heartbeat generator (i). In the heartbeat generator a physical mass is electromagnetically stimulated, resulting in the device shaking in the rhythm of a heart beat.

The device according to this embodiment also comprises LED signal indicator (j). This gives an optical indication of an incoming message with a warm glow in the same rhythm as the heartbeat generator.

In the following, an embodiment of the method according to the present invention is described in more detail, wherein two partner devices are used which form a system. Both partner devices may be constructed in the way as the device described with reference to Fig. 2.
a) Switching power on
   If the user applies pressure to the pressure sensitive area of the emotional communication device for longer than 5 seconds, the device is switched on.
b) Switching power off
   If the user applies pressure to the pressure sensitive area of the emotional communication device for longer than 10 seconds, the device is switched off.
c) Sending a message
   If the user applies pressure to the pressure sensitive area of the emotional communication device 2 seconds, the device sends a message to its partner device. Alternatively the sending of a message can be initiated by stroking the area of the touch sensitive surface in a specific stroke pattern (e.g. three strokes in a row from top to down).
d) Receiving a message
   If the receiving partner device recognises a valid incoming message, the heartbeat generator is being activated. It automatically stops after a certain number of heartbeats (e.g. 10 beats) to save power. However, the indicator light goes on glowing in the rhythm of a heartbeat until the receiving user confirms the reception by applying pressure to the pressure sensitive area for one second. Alternatively the confirmation can be done by stroking the area of the touch sensitive surface in a specific stroke pattern (e.g. two strokes in a row from left to right).

The present invention has now been described with reference to several embodiments thereof. The foregoing detailed description and examples have been given for clarity of understanding only. No unnecessary limitations are to be understood therefore. It will be apparent to those skilled in the art that many changes can be made in the embodiments described without departing from the scope of the present invention. In particular, although features and elements of the present invention are described in the preferred embodiments, in particular combinations, each feature or element can be used alone without the other features and elements of the preferred embodiments or in various combinations with or without other features and elements of the invention. Therefore, the scope of the present invention should not be limited to the methods and systems described herein.

## Claims

1. A device for notifying a user of an incoming predefined message, the device comprising radio communication means for wirelessly receiving the predefined message and signaling means for notifying the incoming message to the user.

2. The device of claim 1, the device further comprising inputting means to be operated by the user for initiating sending a message to another predetermined device, wherein the radio communication means is further adapted to wirelessly transmit the predefined message.

3. The device of claim 2, wherein the inputting means comprises a pressure sensitive area on the device.

4. The device of claim 2 or 3, wherein the inputting means comprises a touch sensitive area on a surface of the device.

5. The device of any one of the preceding claims, wherein the signaling means comprises a pulsating light source.

6. The device of any one of the preceding claims, wherein the signaling means comprises vibration means for causing a pulsating movement of the device.

7. The device of any one of the preceding claims, wherein the radio communication means is adapted to connect to a cellular mobile network or other wireless communication technologies.

8. The device of claim 7, wherein the radio communication means is adapted to encode the predefined message.

9. The device of claim 7 or 8, wherein the radio communication means comprises an antenna and an operator SIM card.

10. The device of any one of the preceding claims, further comprising a battery and preferably further comprising a charging means for charging the battery.

11. The device of any one of the preceding claims, the device having the shape of a heart.

12. A system comprising at least a first device as defined in any one of claims 2 to 11 and at least a second device of any one of claims 1 to 11, wherein the first device is adapted to transmit the predefined message to the second device, the second device being adapted to operate its signaling means in response to receiving incoming message from the first device.

13. The system of claim 12, wherein the second device is adapted to transmit a predefined message to the first device, the first device being adapted to operate its signaling means in response to receiving the incoming message from the second device.

14. A method of transmitting a predefined message to a user using the system of claim 12 or 13, comprising the steps of:
- operating the inputting means of the first device to cause the radio communication means of the first device to transmit the predefined message to the second device;
- receiving the incoming message by the radio communication means of the second device; and
- operating the signaling means of the second device to notify the user of the second device of the incoming message.

15. The method of claim 14, further comprising the step of operating the inputting means of the second device to confirm receipt of the incoming message.
